# EUROPEAN PATENT SPECIFICATION

(11) **EP 3 354 419 B1**
(45) Date of publication and mention of the grant of the patent: **06.03.2019**
(21) Application number: 17153758.2
(22) Date of filing: 30.01.2017
(51) Int. Cl.: B25J 9/16, G05B 23/02

(54) **METHOD AND APPARATUS FOR COLLECTING OPERATING DATA OF AN INDUSTRIAL ROBOT APPLICATION**
VERFAHREN UND VORRICHTUNG ZUM ERFASSEN VON BETRIEBSDATEN EINER INDUSTRIEROBOTERANWENDUNG
PROCÉDÉ ET APPAREIL DE COLLECTE DEDONNÉES DE FONCTIONNEMENT D'UNE APPLICATION ROBOTIQUE INDUSTRIELLE

(43) Date of publication of application: 01.08.2018
(73) Proprietor: ABB Schweiz AG, 5400 Baden (CH)
(72) Inventor: Schmidt, Benedikt, 64283 Darmstadt (DE); Klöpper, Benjamin, 68199 Mannheim (DE); Ouertani, Mohamed-Zied, 68199 Mannheim (DE)

(56) References cited:
- US-A1- 2006 206 289
- US-A1- 2014 215 056
- US-B1- 7 647 131

## Description

The invention is related to a method and an apparatus for collecting operating data of an industrial robot application according to the preambles of claims 1 and 10.

In the field of industrial robots, an industrial robot application comprises at least one robot, a robot control unit for controlling this at least one robot, and a central processing unit. One robot control unit usually is configured such that it can control more than one industrial robots and in addition also other systems, such as for example a linear track or tools attached to the robot. So an industrial robot application in this context is a system comprising at least one industrial robot, potentially in addition other systems such as one or more other robots or a linear track or tools attached to the robot, and a central processing unit. Controlling the robot in this sense means controlling the movement of the robot and its arm or arms and the tools attached to the arm or the arms. Operating data of the at least one robot are data necessary for controlling the at least one robot, and - if present - also the other systems such as one or several further robots or a linear tracker or tools attached to the robot. There may be in addition also various sensors or sensor systems associated with the robot or the robots, such as for example safety sensors such as a camera or a proximity sensor mounted on the robot arm or the robot base or even at the robot tool. Data of such sensors shall be included in what is here in the context of this invention called operating data of the at least one robot.

It is well known to collect operating data of an industrial robot or an industrial robot application within a plant in order to monitor and control a production process in which the robot is involved. US 2006/206289 discloses such a method and system wherein monitored data from robots is used to determine the occurrence of an event that affects the robot operation. Nowadays, it is common to use several if not even hundreds of industrial robots within a production line and send operating data of the industrial robots or the whole production line over an industrial field bus to a central processing unit. The central processing unit is often just a simple programmable logic controller (PLC) which is arranged in the same switch gear as the robot control unit.

In more sophisticated embodiments, a supervisory control and data acquisition system (SCADA) are arranged inside the same switch gear or even somewhere else remote of each other, e.g. in a data center or the cloud. There are certain constrains depending on the environment of the industrial robot for transmitting the operating data to the central processing unit, for example the bandwidth of the industrial field bus, the number of industrial robots associated to one central processing unit, the data storage available and the computing power of the central processing unit. In an embodiment with several hundreds of industrial robots and common central processing units, like PLCs or SCADA systems, it is common to send the operating data of an industrial robot on an irregular or very coarse time base, in order to reduce the amount of bandwidth needed to transmit the data and to reduce the computing power needed to process the data within the central processing unit. Disadvantageously data which is collected coarsely or at irregular intervals is often not usable for an automated data analysis.

To overcome the disadvantage, it is possible to constantly collect data at high sampling rates which is usually costly in data transfer, bandwidth, and storage requirements, respectively, or even not feasible due to constrains like limited bandwidth of the network. Moreover, a randomly triggered transfer of data with high data rates will result in set of data samples where the vast majority of samples represent normal operation and the probability to capture data sample which represent abnormal operation, e.g. during or prior to a failure is very low due to their rare occurrence. Thus, a randomly triggered transfer of data cannot produce a set of data samples suitable for machine learning in a short period of time. Methods and system for data collection with varying collection frequency are known from US 7 647 131 B1 and US 2014/215056 A1.

Accordingly, it is a problem of the present invention to provide for a method of collecting a sufficient number of evaluable data samples of operating data of an industrial robot application within a short period of time in an environment which comprises a restricted amount of resources.

This problem is solved by a method of collecting operating data of an industrial robot application comprising the features as claimed in claim 1.

Further objects of the present invention are included in the dependent claims. According to the method of the present invention for collecting operating data of an industrial robot system, the robot system has at least one robot, a robot control unit for controlling said at least one robot and a central processing unit, said robot control unit having a first communication interface for receiving operating data from the central processing unit and/or transmitting operating data to the central processing unit. The central processing unit has a second communication interface for receiving operating data from the robot control unit and/or transmitting operating data to the robot control unit via an industrial field bus and the first communication interface. Moreover, the central processing unit comprises a data mining unit for analyzing received and/or transmitted operating data. The method comprises the following method steps,
- collecting the operating data of the at least one robot with a collecting frequency and transmitting the collected operating data to the central processing unit when operating the at least one robot,
- analyzing the collected operating data and computing an indicator value from the collected operating data by means of the data mining device,
- comparing the indicator value with a predetermined probability threshold value,
- setting the collecting frequency to a lower collecting frequency if the indicator value is below said predetermined probability threshold value, and
- setting the collecting standard low frequency to a higher collecting frequency predefined according to the analytical purpose if the indicator value is above the predetermined probability threshold value, wherein said probability threshold value (18) is adapted on the basis of operating data (2) which was collected with said higher collecting frequency (22), and wherein said data mining unit (14) comprises a first low frequency data mining unit (14a) which is adapted to analyzing operating data (2) which is collected with said lower collecting frequency (20) and a second high frequency data mining unit (14b) which is adapted to analyzing operating data (2) which is collected with said higher collecting frequency (22), and that said first data mining unit (14a) is activated when collecting data with said lower collecting frequency (20), and said second high frequency data mining unit (14b) is activated when collecting data with said higher collecting frequency (22).

The method according to the invention provides for the advantage that it avoids the costs involved with a continuously high sampling rate, high volume data transfer and high volume storage. Moreover, it increases the efficiency of the system by enabling a human operator to monitor irregular events with high-sampling rates, so that any action can be taken if necessary, e.g. to avoid unplanned downtimes. Besides this, the method provides for the option of an automated decision making of trained high-sampling data models, wherein such actions can be triggered automatically without the necessity of a human interaction.

If no incident occurs within a specific period of time after switching to the high collecting frequency, the collection frequency is set to the low collecting frequency. This low collecting frequency may for example include data which predicts events within the next ten days based on a time-series with a sampling rate of one day, during which the automatic switch back to the low sampling frequency might happen after one day or two days.

According to a preferred embodiment of the invention, a data mining model is used which is trained on low-sampling data, in order to detect if an irregular event arises. If the low-sampling data mining model indicates that a situation is irregular e.g. different from an orderly situation or indicating an error or a failure, a data collection process with higher sampling rate is initiated. In the scope of the present application, the terms sampling and collecting are to be understood as synonyms.

Having two data mining models allows for the use of a first central data mining unit for the low frequency data and a second independent data mining unit for the high frequency data, which provides for the option to advantageously adapt each data mining unit separately to the corresponding low or high collecting frequency.

Moreover, in the scope of the subject application, a low frequency model is a machine learning model like the classifier which will be described herein-below that is trained on low-frequency data, e.g. a time-series with a sampling rate of one day or one hour. In contrary hereto, a high frequency model is preferably a machine learning model like a classifier as described herein-below which is trained on high-frequency data, e.g. a time-series with a sampling rate of one minute, one second, or even less. It is to be understood that the terms high frequency and low frequency are relative and depend on the specific irregular event that shall be predicted.

The collected operating data may for example be the voltage of a drive/engine, the total power consumption of a robot or the angular velocity of a joint etc.. Again, this will depend on the event to be predicted. For an overheating of a controller cabinet for example, the collected operating data could be the cabinet temperature and the fan speed. For a mechanical failure, it could be vibration signals which are generated by a sensor.

However, the difference between a high-sampling data mining model and a low-sampling data mining model is that the latter one does not trigger any critical actions, so that there is no need that this model is very accurate in decision making.

Once the collecting at higher collecting frequency is started, the data, which is also referred to as high sampling data, can be stored for later analysis, e.g. to generate a high-sampling data mining model which is more accurate. Moreover there can be the option that the high-sampling data mining model could trigger actions, e.g. the initiation of a maintenance action or the provision of the high-sampling data to an operator or other human expert in order to monitor the process and analyze the irregularities.

If the low sampling data mining model indicates an irregular event, e.g. a failure, an abnormality or an error signal, the data collection process is switched to the high sampling data frequency. In this respect, low sampling data is defined in this application as data which is sampled with a low collecting frequency e.g. less than one sample per minute (1/60 Hz), preferably less than one sample per hour (1/3600 Hz) or even less than one sample per day (1/86400 Hz). In contrary hereto, high sampling data is defined as data which is sampled with a high collecting frequency, for example more than one sample per minute (1/60 Hz), preferably more than one sample per second (1 Hz) or even more than 10 samples per second (10 Hz).

According to a further object of the invention, high sampling data can be stored and send out for later analytics, for example with a low transfer rate if the bandwidth of an industrial fieldbus for controlling the robot is lower than the required bandwidth for sending the data in a continuous data stream with the sampling rate of high sampling data.

In another embodiment of the invention, a model which is trained on high sampling data can be applied to the high-sampling data and an action can be triggered based on the result of the application of this model. Moreover, the high-sampling data can be streamed to an end-user interface which enables a monitoring by human experts e.g. a remote service technician.

According to yet another aspect of the invention, the data mining unit may further apply classification algorithms. In case of one or several time-series of signals e.g. the signals which are read by a sensor as an input, the data mining unit might initiate the following actions:
- Optionally change the input data of a sensor to equidistant samples and/or
- Calculate features from an inputted time-series (e.g. average, min, max, variance).
- Create a feature vector (e.g. the signals read by a sensor at predetermined time intervals, e.g. every minute from the equidistant sampling) or the calculated features.
- Use this feature vector as an input for a binary classifier which is trained on historic data that will input one of two classes (class 1: an irregular event will occur within a predetermined time interval in the near feature (e.g. within one day) or class 2: an irregular event will not occur within the time interval).
- Outputting the probability by a probabilistic classifier (like naive bayes) or approximating the probability on basis of the classification accuracy (e.g. 70% accuracy) of a deterministic classifier (e.g. support vector machines, artificial neural networks, decision trees) which is applied to a test data set.

Appropriate methods for detecting irregular events (abnormal data) and carrying out the afore-mentioned actions are for example described in US 8306931 A1.

According to another embodiment of the invention, the implementation of a certain type of model to be used depends on the input data of the high frequency model and the outcome of a model rather than a fixed delay time. As an example, assuming that the high frequency model is trained on time-windows of one hour and the model returns to the low sampling frequency if no irregular event occurs. If the high frequency model recognizes an irregular event, the data collection on basis of the high frequency model continues.

Moreover, it is also possible to build a cascade of models. This may include for example a first model which takes a data sample every 10 minutes and switches off if no irregular event is detected, and a second model which takes a data sample after 20 minutes and switches off if no irregular event is detected or continues and so on, thereby forming a cascade of models which decides if the high frequency data collection is switched off or not. Once a model has reached sufficient classification accuracy, the cascade and the data collection are stopped.

In a preferred embodiment of the invention, a data storage unit is associated to the central processing unit, and the collected operating data which is transmitted to the central processing unit is stored in the data storage unit before analyzing the operating data by means of the data mining unit. The data storage unit could be a local data mass storage device like a random access memory (RAM), a hard disk drive, a solid state disk, a USB storage or even a remote network data storage located somewhere in a data center or a cloud. The remote data storage which is in data communication with the central processing unit may provide storage capacity over a network system, for example over the internet or an internal bus system. Preferably, the communication takes place over the same industrial fieldbus which is also used for controlling the robot(s), but could also incorporate another industrial fieldbus, like industrial Ethernet, for operating sensors and non-robot devices.

This provides for the advantage that the data can be stored for later analysis by a human expert or for generating a more accurate data mining model. It is even possible to compare the collected and saved data of a plurality of industrial robots, e.g. up to several hundred industrial robots, in order to correlate common malfunctions or specific operating conditions in a plant which lead to such malfunctions or lead to a higher maintenance demand etc.

According to another object of the present invention, the probability threshold value may be adapted to a new probability threshold value after an occurrence of an irregular event, e.g. a malfunction or a critical operating state of the industrial robot in dependence of the data included in the collected data stored in the data storage unit. This has the advantage that the probability threshold value may be autonomously adapted (self -teaching) by means of the data stored in the associated data storage unit which was previously collected by the robot control unit with low and/or with high data collecting frequency.

According to another embodiment of the invention, the data mining unit analyzes the collected operating data which might be transmitted to the central processing unit first on basis of an adaptable analyzing function. This may also include an analysis of the collected operating data upon transmitting the collected data to the central processing unit. This embodiment has the advantage that the underlying analyzing function of the data mining unit may be configured to be self-adapting (self-learning). This may be achieved in a simple embodiment by an analyzing function which is a rational function including weighted polynomials and self-training means. The self-training means in this embodiment may e.g. adapt the weights of each polynomial to match the detection of an event, e.g. a malfunction best.

According to a further aspect of the invention, the threshold value and/or the analyzing function are manually adaptable by inputting a new threshold value and/or a new parameter value by means of a human machine interface (HMI). This gives a human expert or robot operator the option to initially set the analyzing function and/or the threshold value. Moreover, it gives the human expert and/or robot operator the further option to adjust the threshold value and/or analyzing function while operating the industrial robot in a teach-in mode of the robot.

In another embodiment of the invention, the robot control unit may comprise a second storage device which is adapted to temporarily store the collected operating data if the bandwidth for transmitting the collected operating data from the first communication interface to the second communication interface is lower than the bandwidth which is required for transmitting the operating data with the collecting frequency. This has the advantage that the invention can be adapted to a limited transmitting bandwidth by temporarily storing the collected operating data in the second storage device while preferably at the same time transmitting the stored data in the second storage device to the central processing unit at lower data rates, compared to a live stream.

Furthermore, instead of all robots permanently transmitting high-sampling data, only one or a few robots out of a plurality of robots may send data, in order to lower the required bandwidth compared to a situation where high-sampling data is transferred continuously.

According to yet another embodiment of the invention, the operating data can comprise data for operating the industrial robot. It can also comprise data from the central processing unit and/or data from a second industrial robot. Moreover, it is possible that the operating data comprises data from environmental sensors like a temperature sensor, a solar radiation detector or a humidity and/or air pressure sensor. In this embodiment, the operating data does preferably not only include data which is required for operating the industrial robot, but also comprises environmental information which an operator may input by means of an HMI. Also other available information, e.g. information about or transmitted via the industrial field bus for controlling the robot(s) could be used as operating data. Such operating data could also be seen in the absence of any data, which may e.g. occur if a temperature sensor is not responding or another industrial robot is not sending any information.

Moreover, in the scope of the present application, the steps of setting the collecting frequency to a lower collecting frequency if said indicator value is below a predetermined probability threshold value, and the step of setting the collecting frequency to a higher collecting frequency if said indicator value is above the predetermined probability threshold value shall also include embodiments of an inverse configuration in which the indicator value is subtracted from a maximum probability value and thus the switching to the high collecting frequency is done when the inverted probability value is below the predetermined probability threshold value.

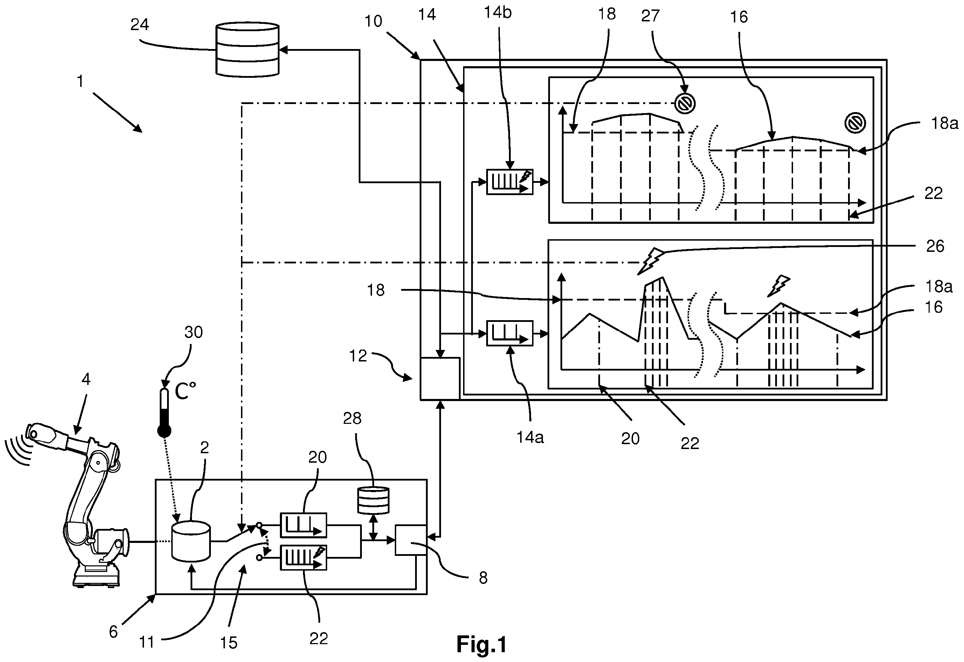

The invention is hereinafter described with reference to the accompanying drawing. In the only drawing
- Fig. 1: shows a schematic overview of an industrial robot application having a robot and a robot control unit for controlling said robot and a central processing unit.

As it is schematically illustrated in Fig. 1, an industrial robot application 1 comprises an industrial robot 4, a robot control unit 6 for processing associated operating data 2 generated by the robot 4, and a central processing unit 10. The robot control unit 6 is in data communication with the central processing unit 10 over a first communication interface 8 and a second communication interface 12. The operating data 2 is collected by the robot control unit 6 with a collecting frequency 15. The operating data 2 may contain data which is essential for operating the industrial robot 4 as well as environment information like temperature data 30 or even non-robot related data send out from the central processing unit 10 or any sensors (not shown).

As it is indicated by the dotted arrow 11 in Fig. 1, the collecting frequency 15 might be switched from a lower collecting frequency 20 to a higher collecting frequency 22. The collected operating data 2 is transmitted to the central processing unit 10 by the first and second communication interfaces 8, 12. If necessary, the collected operating data 2 may be cached or temporarily stored in the second storage device 28 which is for example a USB drive, a random access memory, a flash storage or a similar type of storage device.

The central processing unit 10 is receiving the collected operating data 2 from the second communication interface 12 and transmits the collected operating data 2 to the data storage unit 24 for storing the same and to a data mining unit 14 for analyzing the collected operating data 2. The data mining unit 14 comprises a separate data mining unit 14a, 14b for each collecting frequency 20, 22. The low frequency data mining unit 14a is analyzing the collected operating data 2 if the data was collected at the lower collecting frequency 20; and the high frequency data mining unit 14b is analyzing the collected operating data 2 if the collected operating data 2 was collected at the higher collecting frequency 22.

As it is further schematically indicated in Fig. 1, the data mining unit 14a, 14b, which is currently active, is computing an indicator value 16 from the collected operating data 2 and compares this indicator value 16 with a predetermined probability threshold value 18. If the collected operating data 2 is collected at the lower collecting frequency 20 and the indicator value 16 is above the predetermined probability threshold value 18, as it is indicated by flash 26 due to the occurrence of an irregular event, e.g. a malfunction of a sensor or a critical operating state of the robot 4, the collecting frequency 15 is switched to the higher collecting frequency 22. In this case, the collected operating data 2 is collected at the higher collecting frequency 22 and analyzed by the high frequency data mining unit 14b.

The high frequency data mining unit 14b is preferably able to also transmit the collected operating data 2 to a human expert or operator for further investigations (not shown). In order to reduce or increase the amount of operating data 2 which is collected at the higher collecting frequency 22 in case of an irregular event which was detected in the collected data 2 within a predetermined time interval or not, the high frequency data mining unit 14b is able to alter the probability threshold value 18 to a new probability threshold value 18a. The probability threshold value 18 and the new probability threshold value 18a are preferably identical for both data mining units 14a, 14b.

In the same way, the high frequency data mining unit 14b is able to switch back 27 to the lower collecting frequency 20 if no irregular event occurred within a predetermined period of time in order to reduce the amount of operating data collected and transmitted.

### List of reference signs

- 1: industrial robot application
- 2: Operating data
- 4: Industrial robot
- 6: Robot control unit
- 8: First communication interface
- 10: Central processing unit
- 11: dotted arrow indicating switching between collecting frequencies
- 12: Second communication interface
- 14: Data mining unit
- 14a: Low frequency data mining unit
- 14b: High frequency data mining unit
- 15: Collecting frequency
- 16: Indicator value
- 18: Probability threshold value
- 20: Lower collecting frequency
- 22: Higher collecting frequency
- 24: Data storage unit
- 26: Symbol indicating occurrence of irregular event
- 27: Switch back to lower frequency
- 28: Second storage device
- 30: Environment sensor

## Claims

1. Method of collecting operating data (2) of an industrial robot system, said robot system having at least one robot (4), a robot control unit (6) for controlling said at least one robot (4) and a central processing unit (10), said robot control unit (6) having a first communication interface (8) for receiving and/or transmitting said operating data (2) from/to the central processing unit (10), said central processing unit (10) having a second communication interface (12) for receiving and/or transmitting said operating data (2) and a data mining unit (14) for analyzing said received operating data (2), said method comprising the following method steps:
- collecting the operating data (2) of at least said one robot (4) with a collecting frequency (15) and transmitting said collected operating data (2) to said central processing unit (10) when operating at least said robot (4),
- analyzing said collected operating data (2) and computing an indicator value (16) from said collected operating data (2) by means of said data mining unit (14),
- comparing said indicator value (16) with a predetermined probability threshold value (18),
- setting said collecting frequency (15) to a lower collecting frequency (20) if said indicator value (16) is below said predetermined probability threshold value (18),
- setting said collecting frequency (15) to a higher collecting frequency (22) if said indicator value (16) is above said predetermined probability threshold value (18), **wherein**
said probability threshold value (18) is adapted on the basis of operating data (2) which was collected with said higher collecting frequency (22), and wherein said data mining unit (14) comprises a first low frequency data mining unit (14a) which is adapted to analyzing operating data (2) which is collected with said lower collecting frequency (20) and a second high frequency data mining unit (14b) which is adapted to analyzing operating data (2) which is collected with said higher collecting frequency (22), and that said first data mining unit (14a) is activated when collecting data with said lower collecting frequency (20), and said second high frequency data mining unit (14b) is activated when collecting data with said higher collecting frequency (22).

2. Method according to claim 1,**characterized in that,** a data storage unit (24) is associated to said central processing unit (10), and that said collected operating data (2) which is transmitted to said central processing unit (10) is stored in said data storage unit (24) before analyzing said operating data (2) by means of said data mining unit (14).

3. Method according to claim 2, **characterized in that,** after an occurrence of a malfunction or a critical operating state (26) of at least said industrial robot (4), said probability threshold value (18) is adapted to a new probability threshold value (18a) in dependence of the data included in the collected data (2) which is stored in said data storage unit (24).

4. Method according to any of the claims, 1 to 3, **characterized in that,** said data mining unit (14) analyzes said collected operating data which is transmitted to said central processing unit (10) on basis of an adaptable analyzing function.

5. Method according to claim 4, **characterized in that,** said adaptable analyzing function is adapted manually by putting in a new analyzing function.

6. Method according to any of the claims 1 to 5, **characterized in that** said probability threshold value (18) is adapted manually by putting in a new probability threshold value (18a).

7. Method according to any of the previous claims, **characterized in that,** said robot control unit (6) comprises a second storage device (28) which is adapted to temporarily store said collected operating data (2) if a bandwidth for transmitting said collected operating data (2) from said first communication interface (8) to said second communication interface (12) is lower than a bandwidth which is required for transmitting said collected operating data (2) with said collecting frequency (15).

8. Method according to claim 1, **characterized in that,** said collected operating data (2) comprises data for operating at least said industrial robot (4) and/or data from said central processing unit (10) and/or data from a second industrial robot and/or from environment sensors like temperature (30), solar radiation, humidity and/or air pressure.

9. Apparatus for carrying out the method according to any of the preceding claims comprising at least an industrial robot (4), a robot control unit (6) for controlling said at least one robot (4) and a central processing unit (10), said robot control unit (6) having a first communication interface (8) for receiving and/or transmitting operating data (2) for operating said at least one robot (4) from/to the central processing unit (10), said central processing unit (10) having a second communication interface (12) for receiving and/or transmitting said operating data (2) and a data mining unit (14) for analyzing said received operating data (2), wherein said central processing unit (10) and said data mining unit (14) are configured to
- collecting the operating data (2) of said at least one robot (4) with a collecting frequency (15) and transmitting said collected operating data (2) to said central processing unit (10) when operating said at least one robot (4),
- analyzing said collected operating data (2) and computing an indicator value (16) from said collected operating data (2) by means of said data mining unit (14),
- comparing said indicator value (16) with a predetermined probability threshold value (18),
- setting said collecting frequency (15) to a lower collecting frequency (20) if said indicator value (16) is below said predetermined probability threshold value (18), and
- setting said collecting frequency (15) to a higher collecting frequency (22) if said indicator value (16) is above said predetermined probability threshold value (18), **wherein**
said probability threshold value (18) is adapted on the basis of operating data (2) which was collected with said higher collecting frequency (22) and wherein said data mining unit (14) comprises a first low frequency data mining unit (14a) which is adapted to analyzing operating data (2) which is collected with said lower collecting frequency (20) and a second high frequency data mining unit (14b) which is adapted to analyzing operating data (2) which is collected with said higher collecting frequency (22), and that said first data mining unit (14a) is activated when collecting data with said lower collecting frequency (20), and said second high frequency data mining unit (14b) is activated when collecting data with said higher collecting frequency (22).

## Patentansprüche

1. Verfahren zum Erfassen von Betriebsdaten (2) eines Industrierobotersystems, wobei das Robotersystem mindestens einen Roboter (4), eine Robotersteuerungseinheit (6) zum Steuern des mindestens einen Roboters (4) und eine Zentraleinheit (10) aufweist, wobei die Robotersteuerungseinheit (6) eine erste Kommunikationsschnittstelle (8) zum Empfangen und/oder Senden der Betriebsdaten (2) aus der/an die Zentraleinheit (10) aufweist, wobei die Zentraleinheit (10) eine zweite Kommunikationsschnittstelle (12) zum Empfangen und/oder Senden der Betriebsdaten (2) und eine Data-Mining-Einheit (14) zum Analysieren der empfangenen Betriebsdaten (2) aufweist, das Verfahren die folgenden Verfahrensschritte umfassend:
- Erfassen der Betriebsdaten (2) von mindestens dem einen Roboter (4) mit einer Erfassungsfrequenz (15) und Senden der erfassten Betriebsdaten (2) an die Zentraleinheit (10), wenn mindestens der Roboter (4) betrieben wird,
- Analysieren der erfassten Betriebsdaten (2) und Berechnen eines Indikatorwerts (16) aus den erfassten Betriebsdaten (2) mittels der Data-Mining-Einheit (14),
- Vergleichen des Indikatorwerts (16) mit einem vorgegebenen Wahrscheinlichkeitsschwellenwert (18),
- Einstellen der Erfassungsfrequenz (15) auf eine niedrigere Erfassungsfrequenz (20), wenn der Indikatorwert (16) unter dem vorgegebenen Wahrscheinlichkeitsschwellenwert (18) liegt,
- Einstellen der Erfassungsfrequenz (15) auf eine höhere Erfassungsfrequenz (22), wenn der Indikatorwert (16) über dem vorgegebenen Wahrscheinlichkeitsschwellenwert (18) liegt, **wobei**
der Wahrscheinlichkeitsschwellenwert (18) auf der Grundlage der Betriebsdaten (2) angepasst wird, die mit der höheren Erfassungsfrequenz (22) erfasst wurden, und wobei die Data-Mining-Einheit (14) eine erste Data-Mining-Einheit (14a) für niedrige Frequenz, die angepasst ist, um Betriebsdaten (2) zu analysieren, die mit der niedrigeren Erfassungsfrequenz (20) erfasst werden, und eine zweite Data-Mining-Einheit (14b) für hohe Frequenz umfasst, die angepasst ist, um Betriebsdaten (2) zu analysieren, die mit der höheren Erfassungsfrequenz (22) erfasst werden, und dass die erste Data-Mining-Einheit (14a) aktiviert wird, wenn Daten mit der niedrigeren Erfassungsfrequenz (20) erfasst werden, und die zweite Data-Mining-Einheit (14b) für hohe Frequenz aktiviert wird, wenn Daten mit der höheren Erfassungsfrequenz (22) erfasst werden.

2. Verfahren nach Anspruch 1, **dadurch gekennzeichnet, dass** eine Datenspeichereinheit (24) der Zentraleinheit (10) zugeordnet ist und dass die erfassten Betriebsdaten (2), die an die Zentraleinheit (10) gesendet werden, in der Datenspeichereinheit (24) gespeichert werden, bevor die Betriebsdaten (2) mittels der Data-Mining-Einheit (14) analysiert werden.

3. Verfahren nach Anspruch 2, **dadurch gekennzeichnet, dass** nach einem Auftreten einer Fehlfunktion oder eines kritischen Betriebszustands (26) von mindestens dem Industrieroboter (4), der Wahrscheinlichkeitsschwellenwert (18) in Abhängigkeit der Daten, die in den erfassten Daten (2) enthalten sind, die in der Datenspeichereinheit (24) gespeichert sind, auf einen neuen Wahrscheinlichkeitsschwellenwert (18a) angepasst wird.

4. Verfahren nach einem der Ansprüche 1 bis 3, **dadurch gekennzeichnet, dass** die Data-Mining-Einheit (14) die gesammelten Betriebsdaten, die an die Zentraleinheit (10) gesendet werden, auf der Grundlage einer anpassbaren Analysefunktion analysiert.

5. Verfahren nach Anspruch 4, **dadurch gekennzeichnet, dass** die anpassbare Analysefunktion manuell durch Eingeben einer neuen Analysefunktion angepasst wird.

6. Verfahren nach einem der Ansprüche 1 bis 5, **dadurch gekennzeichnet, dass** der Wahrscheinlichkeitsschwellenwert (18) manuell durch Eingeben eines neuen Wahrscheinlichkeitsschwellenwerts (18a) angepasst wird.

7. Verfahren nach einem der vorhergehenden Ansprüche, **dadurch gekennzeichnet, dass** die Robotersteuerungseinheit (6) eine zweite Speichervorrichtung (28) umfasst, die angepasst ist, um die erfassten Betriebsdaten (2) vorübergehend zu speichern, wenn eine Bandbreite zum Senden der erfassten Betriebsdaten (2) aus der ersten Kommunikationsschnittstelle (8) an die zweite Kommunikationsschnittstelle (12) geringer ist als eine Bandbreite, die zum Senden der erfassten Betriebsdaten (2) mit der Erfassungsfrequenz (15) erforderlich ist.

8. Verfahren nach Anspruch 1, **dadurch gekennzeichnet, dass** die gesammelten Betriebsdaten (2) Daten zum Betreiben mindestens des Industrieroboters (4) und/oder Daten aus der Zentraleinheit (10) und/oder Daten aus einem zweiten Industrieroboter und/oder aus Umweltsensoren umfassen, wie beispielsweise Temperatur (30), Sonneneinstrahlung, Luftfeuchtigkeit und/oder Luftdruck.

9. Vorrichtung zum Durchführen des Verfahrens nach einem der vorhergehenden Ansprüche, umfassend mindestens einen Industrieroboter (4), eine Robotersteuerungseinheit (6) zum Steuern des mindestens einen Roboters (4) und eine Zentraleinheit (10), wobei die Robotersteuerungseinheit (6) eine erste Kommunikationsschnittstelle (8) zum Empfangen und/oder Senden von Betriebsdaten (2) zum Betreiben des mindestens einen Roboters (4) aus der/an die Zentraleinheit (10) aufweist, wobei die Zentraleinheit (10) eine zweite Kommunikationsschnittstelle (12) zum Empfangen und/oder Senden der Betriebsdaten (2) und eine Data-Mining-Einheit (14) zum Analysieren der empfangenen Betriebsdaten (2) aufweist, wobei die Zentraleinheit (10) und die Data-Mining-Einheit (14) konfiguriert sind, um
- die Betriebsdaten (2) des mindestens einen Roboters (4) mit einer Erfassungsfrequenz (15) zu erfassen und die erfassten Betriebsdaten (2) an die Zentraleinheit (10) zu senden, wenn der mindestens eine Roboter (4) betrieben wird,
- die erfassten Betriebsdaten (2) zu analysieren und einen Indikatorwert (16) aus den erfassten Betriebsdaten (2) mittels der Data-Mining-Einheit (14) zu berechnen,
- den Indikatorwert (16) mit einem vorgegebenen Wahrscheinlichkeitsschwellenwert (18) zu vergleichen,
- die Erfassungsfrequenz (15) auf eine niedrigere Erfassungsfrequenz (20) einzustellen, wenn der Indikatorwert (16) unter dem vorgegebenen Wahrscheinlichkeitsschwellenwert (18) liegt, und
- die Erfassungsfrequenz (15) auf eine höhere Erfassungsfrequenz (22) einzustellen, wenn der Indikatorwert (16) über dem vorgegebenen Wahrscheinlichkeitsschwellenwert (18) liegt, **wobei**
der Wahrscheinlichkeitsschwellenwert (18) auf der Grundlage der Betriebsdaten (2) angepasst wird, die mit der höheren Erfassungsfrequenz (22) erfasst wurden, und wobei die Data-Mining-Einheit (14) eine erste Data-Mining-Einheit (14a) für niedrige Frequenz, die angepasst ist, um Betriebsdaten (2) zu analysieren, die mit der niedrigeren Erfassungsfrequenz (20) erfasst werden, und eine zweite Data-Mining-Einheit (14b) für hohe Frequenz umfasst, die angepasst ist, um Betriebsdaten (2) zu analysieren, die mit der höheren Erfassungsfrequenz (22) erfasst werden, und dass die erste Data-Mining-Einheit (14a) aktiviert wird, wenn Daten mit der niedrigeren Erfassungsfrequenz (20) erfasst werden, und die zweite Data-Mining-Einheit (14b) für hohe Frequenz aktiviert wird, wenn Daten mit der höheren Erfassungsfrequenz (22) erfasst werden.

## Revendications

1. Procédé de collecte de données de fonctionnement (2) d'un système robotique industriel, ledit système robotique comportant au moins un robot (4), une unité de commande de robot (6) pour commander ledit au moins un robot (4) et une unité centrale de traitement (10), ladite unité de commande de robot (6) ayant une première interface de communication (8) pour recevoir et/ou transmettre lesdites données de fonctionnement (2) depuis/vers l'unité centrale de traitement (10), ladite unité centrale de traitement (10) ayant une seconde interface de communication (12) pour recevoir et/ou transmettre lesdites données de fonctionnement (2) et une unité d'exploration de données (14) pour analyser lesdites données de fonctionnement reçues (2), ledit procédé comprenant les étapes de procédé suivantes :
- collecter les données de fonctionnement (2) d'au moins ledit un robot (4) avec une certaine fréquence de collecte (15) et transmettre lesdites données de fonctionnement collectées (2) à ladite unité centrale de traitement (10) lors du fonctionnement d'au moins ledit robot (4),
- analyser lesdites données de fonctionnement collectées (2) et calculer une valeur d'indicateur (16) à partir desdites données de fonctionnement collectées (2) au moyen de ladite unité d'exploration de données (14),
- comparer ladite valeur d'indicateur (16) à une valeur seuil de probabilité prédéterminée (18),
- régler ladite fréquence de collecte (15) à une fréquence de collecte inférieure (20) si ladite valeur d'indicateur (16) est inférieure à ladite valeur seuil de probabilité prédéterminée (18),
- régler ladite fréquence de collecte (15) à une fréquence de collecte plus élevée (22) si ladite valeur d'indicateur (16) est supérieure à ladite valeur seuil de probabilité prédéterminée (18), où
ladite valeur seuil de probabilité (18) est adaptée sur la base de données de fonctionnement (2) qui ont été collectées avec ladite fréquence de collecte plus élevée (22), et où ladite unité d'exploration de données (14) comprend une première unité d'exploration de données à basse fréquence (14a) qui est adaptée pour analyser des données de fonctionnement (2) qui sont collectées avec ladite fréquence de collecte inférieure (20) et une seconde unité d'exploration de données à haute fréquence (14b) qui est adaptée pour analyser des données de fonctionnement (2) qui sont collectées avec ladite fréquence de collecte plus élevée (22), et ladite première unité d'exploration de données (14a) est activée lorsque des données sont collectées avec ladite fréquence de collecte inférieure (20), et ladite seconde unité d'exploration de données à haute fréquence (14b) est activée lorsque des données sont collectées avec ladite fréquence de collecte plus élevée (22).

2. Procédé selon la revendication 1, **caractérisé en ce qu'**une unité de stockage de données (24) est associée à ladite unité centrale de traitement (10), et **en ce que** lesdites données de fonctionnement collectées (2) qui sont transmises à ladite unité centrale de traitement (10) sont stockées dans ladite unité de stockage de données (24) avant analyse desdites données de fonctionnement (2) au moyen de ladite unité d'exploration de données (14).

3. Procédé selon la revendication 2, **caractérisé en ce que**, après la survenue d'un dysfonctionnement ou d'un état de fonctionnement critique (26) d'au moins ledit robot industriel (4), ladite valeur seuil de probabilité (18) est adaptée à une nouvelle valeur seuil de probabilité (18a) en fonction des données incluses dans les données collectées (2) qui sont stockées dans ladite unité de stockage de données (24).

4. Procédé selon l'une quelconque des revendications 1 à 3, **caractérisé en ce que** ladite unité d'exploration de données (14) analyse lesdites données de fonctionnement collectées qui sont transmises à ladite unité centrale de traitement (10) sur la base d'une fonction d'analyse adaptable.

5. Procédé selon la revendication 4, **caractérisé en ce que** ladite fonction d'analyse adaptable est adaptée manuellement en introduisant une nouvelle fonction d'analyse.

6. Procédé selon l'une quelconque des revendications 1 à 5, **caractérisé en ce que** ladite valeur seuil de probabilité (18) est adaptée manuellement en introduisant une nouvelle valeur seuil de probabilité (18a).

7. Procédé selon l'une quelconque des revendications précédentes, **caractérisé en ce que** ladite unité de commande de robot (6) comprend un second dispositif de stockage (28) qui est adapté pour stocker temporairement lesdites données de fonctionnement collectées (2) si une largeur de bande pour transmettre lesdites données de fonctionnement collectées (2) depuis ladite première interface de communication (8) vers ladite seconde interface de communication (12) est inférieure à une largeur de bande qui est requise pour transmettre lesdites données de fonctionnement collectées (2) avec ladite fréquence de collecte (15).

8. Procédé selon la revendication 1, **caractérisé en ce que** lesdites données de fonctionnement collectées (2) comprennent des données pour faire fonctionner au moins ledit robot industriel (4) et/ou des données provenant de ladite unité centrale de traitement (10) et/ou des données provenant d'un second robot industriel et/ou de capteurs de données environnementales telles que la température (30), le rayonnement solaire, l'humidité et/ou la pression atmosphérique.

9. Appareil pour exécuter le procédé selon l'une quelconque des revendications précédentes comprenant au moins un robot industriel (4), une unité de commande de robot (6) pour commander ledit au moins un robot (4) et une unité centrale de traitement (10), ladite unité de commande de robot (6) ayant une première interface de communication (8) pour recevoir et/ou transmettre des données de fonctionnement (2) pour faire fonctionner ledit au moins un robot (4) depuis/vers ladite unité centrale de traitement (10), ladite unité centrale de traitement (10) ayant une seconde interface de communication (12) pour recevoir et/ou transmettre lesdites données de fonctionnement (2) et une unité d'exploration de données (14) pour analyser lesdites données de fonctionnement reçues (2), où ladite unité centrale de traitement (10) et ladite unité d'exploration de données (14) sont conçues pour :
- collecter les données de fonctionnement (2) dudit au moins un robot (4) avec une certaine fréquence de collecte (15) et transmettre lesdites données de fonctionnement collectées (2) à ladite unité centrale de traitement (10) lors du fonctionnement d'au moins ledit robot (4),
- analyser lesdites données de fonctionnement collectées (2) et calculer une valeur d'indicateur (16) à partir desdites données de fonctionnement collectées (2) au moyen de ladite unité d'exploration de données (14),
- comparer ladite valeur d'indicateur (16) à une valeur seuil de probabilité prédéterminée (18),
- régler ladite fréquence de collecte (15) à une fréquence de collecte inférieure (20) si ladite valeur d'indicateur (16) est inférieure à ladite valeur de seuil de probabilité prédéterminée (18), et
- régler ladite fréquence de collecte (15) à une fréquence de collecte plus élevée (22) si ladite valeur d'indicateur (16) est supérieure à ladite valeur seuil de probabilité prédéterminée (18), où
ladite valeur seuil de probabilité (18) est adaptée sur la base de données de fonctionnement (2) qui ont été collectées avec ladite fréquence de collecte plus élevée (22), et où ladite unité d'exploration de données (14) comprend une première unité d'exploration de données à basse fréquence (14a) qui est adaptée pour analyser des données de fonctionnement (2) qui sont collectées avec ladite fréquence de collecte inférieure (20) et une seconde unité d'exploration de données à haute fréquence (14b) qui est adapté pour analyser des données de fonctionnement (2) qui sont collectées avec ladite fréquence de collecte plus élevée (22), et ladite première unité d'exploration de données (14a) est activée lorsque des données sont collectées avec ladite fréquence de collecte inférieure (20), et ladite seconde unité d'exploration de données à haute fréquence (14b) est activée lorsque des données sont collectées avec ladite fréquence de collecte plus élevée (22).
